# EUROPEAN PATENT APPLICATION

(11) **EP 2 866 437 A1**
(43) Date of publication of application: **29.04.2015**
(21) Application number: 14190183.5
(22) Date of filing: 23.10.2014
(51) Int. Cl.: H04N 5/64

(54) **Monitoring system for an outdoor display**

(30) Priority: 25.10.2013 US 201361895520 P
(71) Applicant: CIIL Technologies, LLC, Aurora, IL 60502 (US)
(72) Inventor: Sagerian, Steve, Plainfield, IL Illinois 60544 (US); Campagna, Michael, Plainfield, IL Illinois 60586 (US)
(74) Representative: Braddon, Nicholas

(57) **Abstract**

A display enclosure with a monitoring system includes a display enclosure having an interior, a sensor positioned within the interior of the display enclosure, and a monitoring device coupled to the sensor. The interior of the display enclosure is sized and configured to receive a display device. The monitoring device includes a memory including a plurality of stored values defining a range, a processor communicatively connected to the memory, and a communication interface configured to communicate with a remote device. The processor is configured to process a signal output from the sensor indicative of a property of the interior of the display enclosure. The processor is configured to transmit a status message to the remote device via the communication interface if the property indicated by the signal is outside of the range defined by the stored values.

## Description

### CROSS-REFERENCE TO RELATED PATENT APPLICATIONS

This application claims the benefits of and priority to U.S. Provisional Application No. 61/895,520, which was filed on October 25, 2013. U.S. Provisional Application No. 61/895,520 is incorporated by reference herein in its entirety.

### FIELD

The present disclosure relates generally to display devices. More specifically, the present disclosure relates to an enclosure for a display device having a monitoring system for transmitting status messages related to the enclosure to a remote device.

### BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

In recent years, flat panel televisions have become enormously popular in both commercial and residential sectors. As the prices for plasma and liquid crystal display (LCD) flat panel displays have continued to fall, and the quality for the same devices have improved, more and more businesses and individuals have purchased such devices for both home and business purposes.

The advantages of flat panel displays has also led to expanded application and placement of display devices, including locating display devices in new and challenging environments. For example, display devices might be located outdoors in various residential and commercial settings for entertainment or marketing purposes, potentially exposing the display device to damaging rain, snow, debris, and other elements. Display devices might also be located in indoor environments such as restrooms, kitchens, and industrial settings for various entertainment, marketing, and informational purposes. As with outdoor applications, liquids and other potential contaminants may be near or come into contact with the mounted display device, potentially damaging or degrading the performance of the display device. It is desirable to protect the display device, which is often quite expensive, from exposure to environmental and other potential contaminants. Accordingly, various environmental enclosures have been developed that are intended to protect a display device from the elements and other containments to permit locating such displays outdoors and in other potentially inhospitable environments.

Outdoor display enclosures may contain environmental controls for heating and cooling, fans for air circulation to provide a moderating environment for the sensitive electronics. The internal state and status of the display (to include its temperature, humidity and functionality of internal components) is important to anyone wanting to remotely manage one or more of these units. The failure of a heating element in cold environments or a cooling element in hot climates can mean the ultimate destruction of the display unless the owner/ manager can be notified of the failure as soon as possible.

In addition to the internal state of the display enclosure, it is often important to know the external state of the display enclosure, including its location, its horizontal or vertical attitude, or if it has been subjected to shock or extreme vibration (tampered with).

### SUMMARY

One embodiment relates to a display enclosure with a monitoring system including a display enclosure having an interior, a sensor positioned within the interior of the display enclosure; and a monitoring device coupled to the sensor. The interior of the display enclosure is sized and configured to receive a display device. The monitoring device includes a memory including a plurality of stored values defining a range, a processor communicatively connected to the memory, and a communication interface configured to communicate with a remote device. The processor is configured to process a signal output from the sensor indicative of a property of the interior of the display enclosure. The processor is configured to transmit a status message to the remote device via the communication interface if the property indicated by the signal is outside of the range defined by the stored values.

Another embodiment relates to a monitored display enclosure including an enclosure having an interior that is sized and configured to receive a display device therein, a sensor positioned within the interior of the enclosure, and a monitoring device electrically coupled to the sensor. The sensor produces a signal output that is indicative of a detected property of the interior. The monitoring device includes a memory including a plurality of stored values defining a range, a processor communicatively connected to the memory and configured to process the signal output from the sensor, and a communication interface configured to communicate with a remote device. The processor is further configured to transmit a status message to the remote device via the communication interface if the property indicated by the signal output is outside of the range defined by the plurality of stored values.

Another embodiment relates to a computerized method for monitoring a display enclosure. The display enclosure may be configured to house a display device. The computerized method includes receiving data from a sensor positioned within an interior of the display enclosure, comparing the received data against a stored set point, and transmitting a status message to a remote device if the difference between the received data and the set point exceeds a predetermined amount. The data may be indicative of a property of the interior of the display enclosure. The remote device is provided outside of the display enclosure.

Yet another embodiment relates to a monitored display enclosure for housing a display device. The display enclosure including an enclosure, a first sensor, and a second sensor. The enclosure is configured to be substantially impervious to the ingress of liquid, and the enclosure defines an interior configured to receive the display device. The first sensor is coupled to the enclosure and is configured to detect a level of light outside the enclosure. The second sensor is provided within the enclosure and is configured to detect at least one of a temperature and a humidity of the interior.

The display enclosure may also include at least one of a fan, a heater, and a heat transfer device. The fan, heater, and/or heat transfer device may be provided within the enclosure.

The display enclosure may also include a control system including at least one controller. The control system may be configured to receive a first input signal from the first sensor and communicate a first output signal that is configured to adjust a brightness of the display device. The control system may be configured to receive a second input signal from the second sensor and communicate a second output signal that is configured to control an operation of the fan, the heater, and/or the heat transfer device.

The sensor may comprise at least one of a temperature sensor, a humidity sensor, or an accelerometer.

The sensor may comprise the or a temperature sensor, wherein the detected property of the interior is a temperature, and wherein the range is a temperature range.

The display enclosure with a monitoring system may further comprise:
a humidity sensor positioned within the interior of the display enclosure;
wherein the humidity sensor produces a signal output that is indicative of a detected humidity of the interior;
wherein the processor is configured to process the signal output from the humidity sensor and transmit a second status message to the remote device via the communication interface if the detected humidity indicated by the signal output of the humidity sensor is outside a humidity range defined by a plurality of stored humidity values.

The display enclosure with a monitoring system may further comprise:
a parameter database in communication with the microprocessor and configured to store the plurality of values defining the temperature range and the plurality of stored humidity values;
wherein the plurality of values and the plurality of stored humidity values are reconfigurable via an input into the monitoring device.

The display enclosure with a monitoring system may further comprise:
a heat transfer device; and
a thermal controller configured to control operation of the heat transfer device;
wherein the thermal controller receives an output signal from at least one of the monitoring device and the temperature sensor, and
wherein the thermal controller activates the heat transfer device to heat the interior when the output signal indicates that a temperature in the display enclosure is below a first set point and activates the heat transfer device to cool the interior when the signal output indicates the temperature in the display enclosure is above a second set point; and
wherein the first and second set points define the range.

The display enclosure with a monitoring system may further comprise:
a display controller; and
a light sensor configured to sense a level of light outside the display enclosure and to communicate an output signal indicating the level of light to the display controller; and
wherein the display controller is configured to adjust a brightness of the display device based on the output signal indicating the level of light.

The sensor may comprise the or an accelerometer positioned within the interior and configured to sense an acceleration of the display enclosure, wherein the monitoring device receives an input signal from the accelerometer in the event of an acceleration and communicates an output signal indicating a level of the acceleration to the remote device if the acceleration is greater than a threshold acceleration.

The processor may be coupled to a device positioned within the interior, wherein the processor is configured to transmit operational instructions to the device in response to the signal output from the sensor. The device may comprise one of a fan, a heater, or a thermoelectric module.

The display enclosure with a monitoring system may further comprise:
a display controller; and
a light sensor electrically coupled to the display controller;
wherein the light sensor senses a level of light outside the display enclosure and communicates the level of light to the display controller; and
wherein the display controller is configured to adjust a brightness of the display device based on the level of light.

The processor may be configured to record the signal output from the sensor in a storage device.

The sensor may comprise a current sensor monitoring current draw through a device positioned within the interior, wherein the monitoring device communicates a signal to the remote device when a threshold current draw is reached. The device may comprise one of a fan, a heater, or a thermoelectric module.

The sensor may comprise a humidity sensor, wherein the detected property of the interior is a humidity, and wherein the range is a humidity range.

The signal output may be a voltage value that corresponds to a detected value of the sensor.

The communication interface may include a receiver that is configured to receive an input from a transmitting device located outside the display enclosure, wherein the receiver is in communication with the memory to allow the plurality of stored values to be reconfigured by the input from the transmitting device. The receiver of the communication interface may be a wireless receiver configured to receive the input from the transmitting device wirelessly located remotely relative to the display enclosure.

These and other features, together with the organization and manner of operation thereof, will become apparent from the following detailed description when taken in conjunction with the accompanying drawings, wherein like elements have like numerals throughout the several drawings described below.

### BRIEF DESCRIPTION OF THE DRAWINGS

FIGS. 1A-1C are schematic views of a display system including a display housed in a display enclosure and a monitoring device, in accordance with an exemplary embodiment.
FIG. 2 is an exploded view of a display enclosure constructed in accordance with one particular embodiment.
FIG. 3 is an exploded view showing the bezel and display brackets of the enclosed display device of FIG. 2.
FIG. 4A is a perspective view of the rear cover assembly of FIG 2.
FIG. 4B is an exploded view of the rear cover assembly of FIG. 4A.
FIG. 5 is a rear perspective view of the enclosed display device of FIG. 2.
FIG. 6 is a schematic block diagram illustrating components of the display system of FIG 1.
FIG. 7 is a schematic block diagram illustrating the monitoring device for the display system of FIG. 1, in accordance with an exemplary embodiment.
FIG. 8 is a diagram of network including the monitoring device of FIG. 7.
FIG. 9 is a flowchart of a method of monitoring a display enclosure, in accordance with an exemplary embodiment.

### DETAILED DESCRIPTION

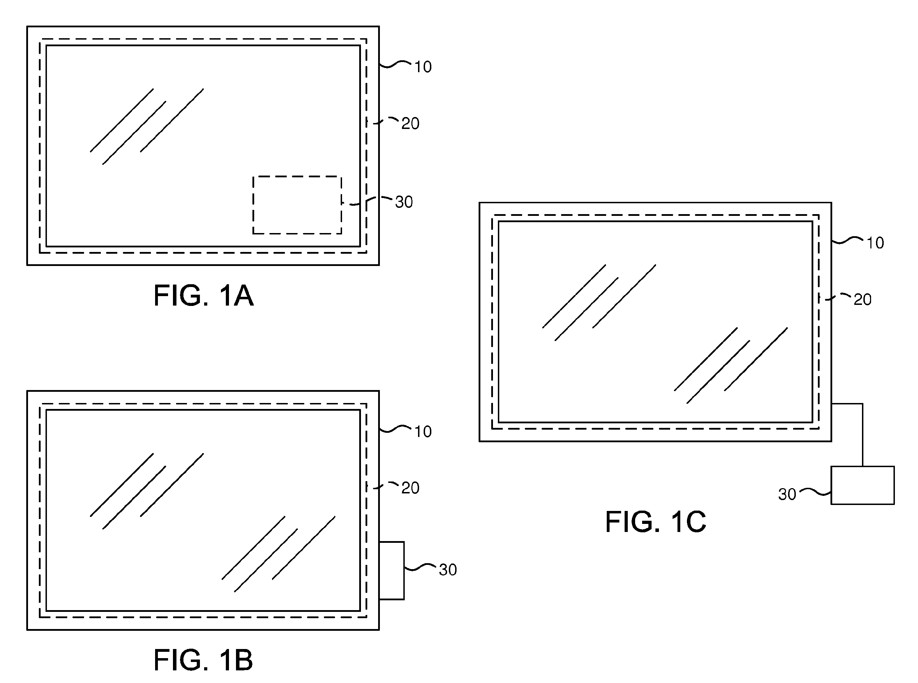

Referring to FIG. 1, a display system is shown to include a display device 20 such as a LCD, LED or plasma flat panel display device housed within a display enclosure 10. The display enclosure 10 is a protective enclosure configured to enclose the display device 20 so that the display device 20 may be located in an outdoor viewing environment or in other environments where the display device 20 requires or may benefit from protection from ambient conditions. Accordingly, the display enclosure 10 is constructed to resist and substantially prevent ingress of various liquids that may be encountered in the viewing location, including precipitation when the display enclosure 10 is mounted for outdoor viewing of the display device 20. In various embodiments, the display enclosure 10 is constructed to prevent ingress of rain, snow and splashing liquid. In a particular embodiment, the display enclosure 10 is constructed to prevent ingress of liquid at a submersed depth of up to five feet of water, which may correspond to a ingress protection (IP) modified rating of IP68 under the IP Code (the contents of which are incorporated herein by reference).

A monitoring device 30 is provided to monitor the state of the display device 20, the enclosure 10, and the conditions in the interior of the enclosure 10. The monitoring device 30 receives input from sensors disposed within the enclosure and transmits data and alerts to a remote user via an appropriate internet protocol. According to various exemplary embodiments, the monitoring device 30 may be provided within the enclosure 10 (FIG. 1A), may be coupled to an exterior of the enclosure 10 (FIG. 1B), or may be provided at a remote location relative to the enclosure 10 (FIG. 1C).

The monitoring device 30 is configured to notify a remote user when internal states of the display enclosure 10 transition beyond preset thresholds or when critical components fail or begin to perform outside their normal limits. The monitoring device 30 is further configured to notify a remote user when the enclosure 10 has been impacted (e.g., after being struck or dropped onto the ground), or moved. The monitoring device 30 still further allows a remote user to upload preset threshold parameter sets or notification events to a large number of devices at once to facilitate the management of a large number of displays 20, such as a network of monitors at a sports stadium or amusement park.

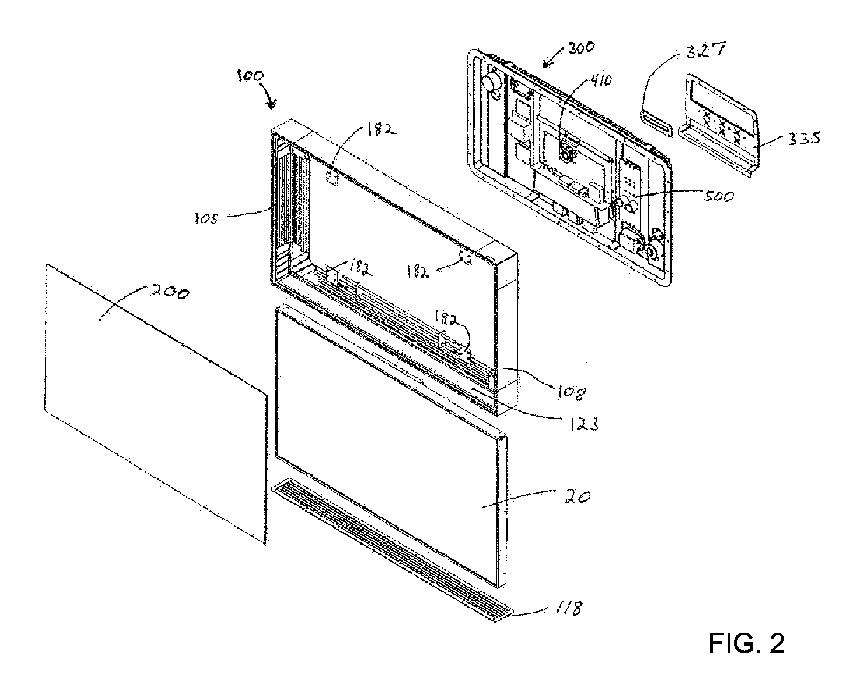

FIG. 2 illustrates an exemplary display enclosure 10 to be monitored with the monitoring device 30. The display enclosure 10 includes a bezel 100 that defines a frame disposed about the periphery of the display device 20. A front cover 200, or display cover, is coupled to the bezel 100 and covers a display opening 111, or front opening, defined by the bezel 100. The front cover 200 is a substantially transparent material that permits viewing of the display device 20 within the display enclosure 10. The display enclosure 10 further includes a rear cover assembly 300 coupled to the bezel 100. The rear cover assembly 300 covers a rear opening 311, opposite the display opening 111, defined by the bezel 100. The rear cover assembly 300 may include a heat sink portion and a cable entry portion 350 that permits passage of various power, video, audio, and other data carrying cables.

As described in detail below, the display enclosure 10 may be provided with features that enable or enhance performance and operation under various ambient conditions, while protecting the display device 20 from adverse conditions such as liquids that may come into contact with the display enclosure 10. The bezel 100, for example, may be constructed to provide the display enclosure 10 with a narrow periphery (also referred to as a profile, that closely surrounds the display opening 111 through which the display area of the display device 20 is visible. Thus, the outer periphery of the bezel 100 defines an area and the display opening 111 defines a display opening area. In this configuration, the distance between an inner edge of the bezel 100 and the periphery of the bezel 100, the bezel thickness, is minimized.

The low profile of the bezel 100 permits the display area of the display device 20 to closely approach the periphery of the bezel 100. For example, the display opening area is maximized relative to the enclosure area. The low profile bezel 100 offers a clean, low profile look where the edge of the display area of the display device 20 is in proximity of the periphery of the display enclosure 10. These configurations permit, for example, a plurality of enclosures 10, each with a display device 20, to be arranged in a video wall such that the respective display devices 20 are in close proximity to one another, thereby enhancing the presentation of the image or images displayed on the display device(s) 20.

The front cover 200 comprises a plate of a substantially transparent material that permits viewing of the display device 20 within the display enclosure 10, such as glass or a substantially transparent plastic. In a particular embodiment, the front cover 200 is formed of tempered glass. The front cover 200 is joined to the bezel 100 in a manner that prevents ingress of liquids into the display enclosure 10. For example, the front cover 200 may be bonded to the bezel 100 using an adhesive such as a urethane adhesive. The front cover 200 may include a border that may be substantially opaque, on the front and/or rear surfaces about the periphery to mask the bonding region between the front cover 200 and the bezel 100. The front cover 200 may further include an anti-reflective coating on the front and/or rear surfaces to reduce photopic reflection. The front cover 200 may also be treated to mitigate ambient ultraviolet (UV) light degradation of the polarizer module of the display device 20. For example, the front cover 200 may include a UV coating configured to shield the polarizer from at least a portion of ambient UV radiation. In various embodiments, the front cover 200 is of sufficient strength to withstand ambient conditions when the display enclosure 10 is located for outdoor viewing. In a particular embodiment, the front cover 200 comprises tempered glass of about 4 mm in thickness.

The display enclosure 10 may also include thermal modulation features. Such thermal modulation features may be active and/or passive and provide temperature control within the display enclosure 10 to assist in maintaining an internal temperature within the display enclosure 10 that is within an operating range of the display device 20. Various thermal control devices may be disposed within or at least partially within the display enclosure 10. Thermal control may be accomplished by including devices intended to add and/or remove heat from the display enclosure 10 depending on ambient conditions and/or the operating conduction of the display device 20. The various thermal control devices may work independently or in concert to assist in modulating the temperature inside the display enclosure 10 within the operating temperature range and/or storage temperature range of the display device 20 under various ambient conditions. In a particular embodiment, the display enclosure 10 is capable of maintaining the internal temperature inside the enclosure within the operating range of the display device 20 for an ambient temperature range of between about 1 degrees Celsius and about 60 degrees Celsius. The thermal control devices within the display enclosure 10 may be passive and/or active devices.

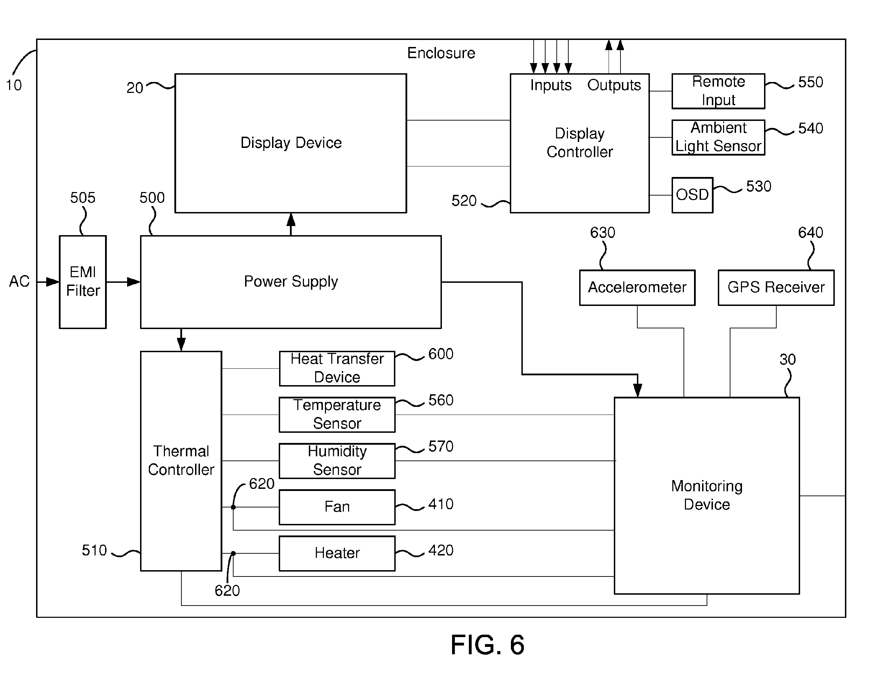

The display enclosure 10 may include an internal fan 410 located within the display enclosure 10 as shown in FIG. 2. The internal fan 410 circulates air within the display enclosure 10, mitigating thermal gradients or hot spots on, for example, a surface of the display device 20 and regions within the display enclosure 10. The internal fan 410 is electrically coupled to a power source to provide operating power. In one embodiment, as depicted in FIG. 6 and described more fully below, a power supply 500 may be included within the display enclosure 10 to provide direct or indirect power to the internal fan 410 and other devices within the display enclosure 10.

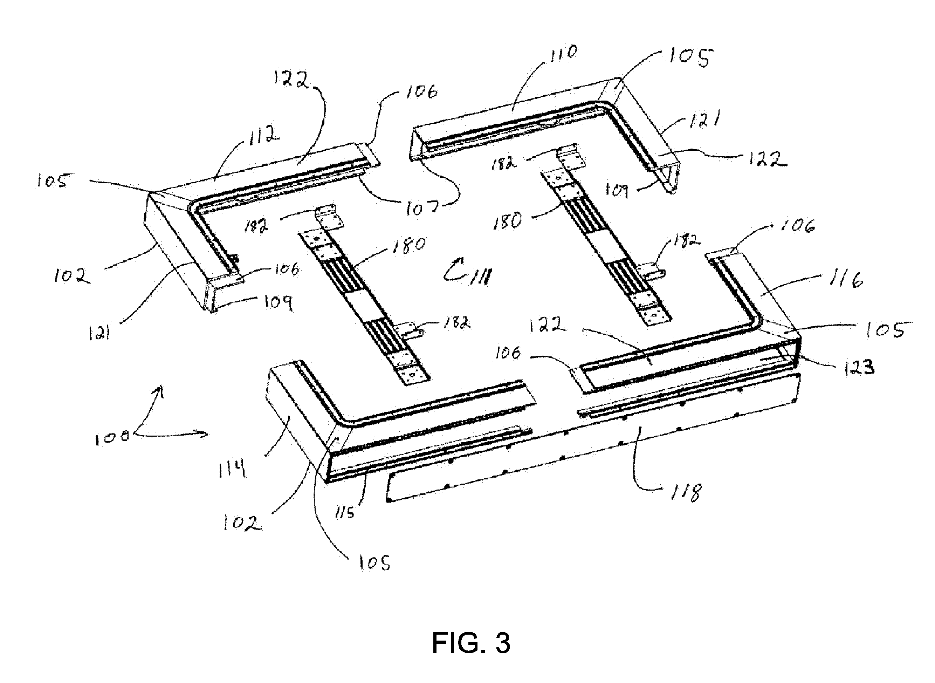

As shown in FIG. 3, the bezel 100 defines the periphery of the display enclosure 10. The bezel 100 is generally sized such that the display device 20 fits within the region defined by the bezel 100. The bezel 100 may include multiple frame members 105 that are assembled to define the bezel 100. As shown, each of the plurality of frame members 105 is generally of a modified "C-shape" where a rear surface of the member may extend inwardly from a lateral surface beyond a front surface of the member. However, other configurations may also be used, including "L-shaped" and other shaped frame members. The plurality of frame members 105 may be constructed of metal such as aluminum or other material capable of providing sufficient strength and rigidity, while maintaining a low peripheral profile for the display enclosure 10. In the depicted embodiment, the frame members include a first upper frame 110, a second upper frame 112, a first lower frame 114, and a second lower frame 116. The bezel 100 further includes a lower plate 118 coupled to the first lower frame 114 and the second lower frame 116. However, other configurations of the bezel 100 may be constructed, including a single-piece frame, two-piece frame, and frames comprising even more pieces.

As depicted in FIG. 3, each of the frame members 105 includes a frame interface 106 disposed on at least one end of the respective member. When the bezel 100 is assembled, each of the frame interfaces 106 is received by an adjacent frame member 105. The plurality of frame members 105 are assembled to form the perimeter of the bezel 100, defining an outer or peripheral surface 108. The plurality of frame members 105 may be joined using an adhesive such as a high-strength epoxy. However, other techniques for joining the frame members 105 may also be used, including connecting elements (e.g., threaded fasteners, clips, rivets, etc.), welding, and combinations thereof. The first lower frame 114 and the second lower frame 116 may further include a lower flange 115 configured to interface with the lower plate 118. The lower flange 115 defines a lower opening 123 in the bezel 100. The lower opening 123 is sized to receive the display device 20 during manufacturing of the display enclosure 10. The lower plate 118 is coupled to the first lower frame 114 and the second lower frame 116 at the lower flange 115. The lower plate 118 may be joined to the lower flange 115 by various techniques, including a plurality of connecting elements, welding, and combinations thereof. Regardless of the specific construction of the bezel 100, it will be appreciated that, in use, the bezel 100 provides support for the display device 20 and is substantially impervious to liquids and prevents ingress of liquids and other containments into the display enclosure 10 that may be encountered in the mounting environment.

With reference to FIG. 3, the frame members 105 may form an inner edge 107 along a bezel front surface 101 that extends from a front edge 102 of the bezel 100 that defines the display opening 111. The display area of the display device 20 is visible through the display opening 111. As such, the bezel 100 may be constructed to various dimensions to accommodate display devices (e.g., display device 20) of different sizes. For example, the bezel 100 may be constructed in accordance with display device screen sizes that are commonly manufactured. In a particular embodiment, the bezel 100 is constructed to accommodate a 42 inch display device 20.

As referenced previously, in various embodiments the bezel 100 is constructed such that the thickness of the bezel, i.e., the normal distance between the inner edge 107 and the peripheral surface 108, the portion visible when viewing the display enclosure 10 from the front, is minimized. That is, the bezel 100 has a low profile surrounding the display opening 111. In other words, the area of the display opening 111 is maximized relative to the area of the display enclosure 10 defined by the peripheral surface 108. The low peripheral profile of the bezel 100 may enhance the overall look of the display enclosure 10, as well as minimizing the space needed in a mounting location for installation of an enclosed display. In multiple screen arrangements, where several displays are positioned horizontally and/or vertically next to one another, the low profile of the bezel 100 may provide an enhanced seamless appearance of the displayed image(s) on the multiple display devices (e.g., display device 20).

The display opening 111 is covered by the front cover 200. As shown in FIG. 3, the front cover ledge 109 may be disposed along the inner edge 107 and be recessed from the bezel front surface 101 to receive the front cover 200. The front cover ledge 109 may be recessed from the bezel front surface 101 about the thickness of the front cover 200 so that the bezel front surface 101 and the front cover 200 define a substantially smooth surface. In other words, the surface of the front cover 200 is neither perceptibly raised above, nor depressed below the bezel front surface 101. Alternatively, the front cover 200 may extend over the front of the bezel front surface 101 to the outer edge of bezel 100 or a portion thereof. In yet another embodiment, the front cover 200 may be disposed in back of the bezel front surface 101 and received within the bezel 100.

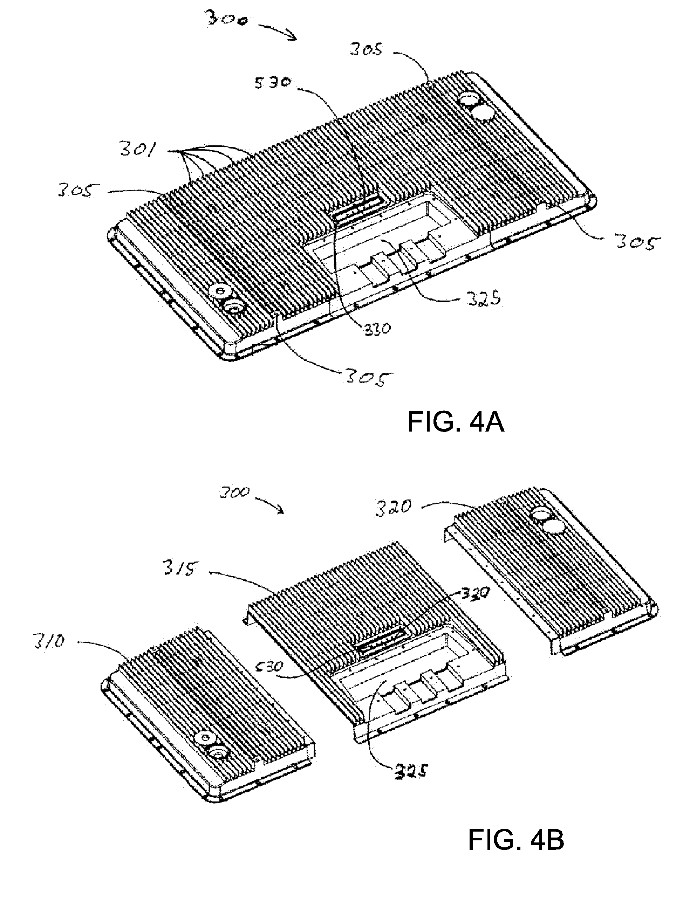

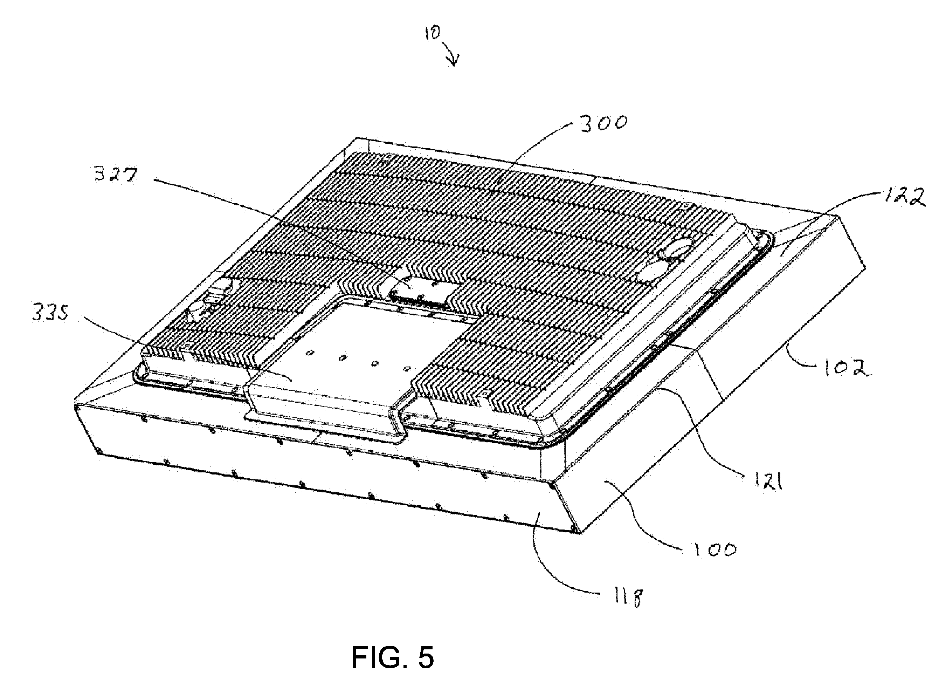

As shown in FIGS. 2 and 5, a rear cover assembly 300 covers the rear portion of the display enclosure 10. More particularly, the rear cover assembly 300 covers the rear opening 311 defined by the bezel 100. The rear cover assembly 300 is attached to a rear surface 122 extending from a rear edge 121 of the bezel 100. The rear cover assembly 300 is joined to the bezel 100 in a manner that prevents ingress of liquids into the display enclosure 10. A plurality of connecting elements may be received about the perimeter of the rear cover assembly 300 in order to join the rear cover assembly 300 to the bezel 100. The use of removable connecting elements allows for installation of and access to the display device 20 within the display enclosure 10. In an embodiment, a gasket may be disposed between the rear cover assembly 300 and the bezel 100 to provide appropriate sealing of the display enclosure 10. The rear cover assembly 300 also serves as a heat sink, dissipating heat generated from within the display enclosure 10 to the environment outside the enclosure. As such, at least a portion of the rear cover assembly 300 may comprise a material having a relatively high thermal conductivity. For example, in an embodiment, the rear cover assembly 300 may be formed of die cast aluminum. As depicted in FIG. 4A, the rear cover assembly 300 assembly may include a heat sink portion that comprises a plurality of fins 301 disposed on the outer surface to enhance convective transfer of heat generated from within the display enclosure 10 to the environment.

In various embodiments, the display enclosure 10 is constructed by assembling the plurality of frame members 105 to form the bezel 100. After the bezel 100 is formed, the display device 20 is introduced into the region defined by the bezel 100 through the lower opening 123. With the display device 20 in place within the region defined by the bezel, the lower plate 118 is secured to the bezel 100. By introducing the display device 20 through the lower opening 123, several advantages may be achieved, including a low profile for the bezel 100 and a well sealed enclosure. Because the display device 20 is introduced through the lower opening 123, the dimensions of various portions of the bezel 100 may be increased. For example, the rear surface 122 may be extended towards the interior of the bezel 100 to enhance the structural integrity of the display enclosure 10 with no increase in the profile of the bezel 100 because the display device 20 need not fit through the rear opening defined by the rear surface 122. Additionally, extending the rear surface 122 permits the front portions of the bezel 100, including the front surface 101 and the front cover ledge 109, to have a low profile.

FIG. 4B shows an embodiment of the rear cover assembly 300 that includes multiple panels, including a left panel 310, a central panel 315, and a right panel 320, that are coupled together. Similar to the bezel 100, the left panel 310, the central panel 315, and the right panel 320 may be joined using a high-strength adhesive such as epoxy but may be attached using other techniques, including connecting elements, welding, and combinations thereof. As shown in FIG. 3A, the rear cover assembly 300 may include a plurality of mount attachment features 305 that permit the display enclosure 10 to be coupled to a pedestal, wall mount, ceiling mount, or other mounting system. In one embodiment, the plurality of mount attachment features 305 includes openings disposed in the rear cover assembly according to an industry standard pattern. The rear cover assembly 300 may include an access area 325 as shown in FIGS. 3A and 3B. The access area 325, for example, provides entry for power and signal cables coupled to the display device 20. With reference to FIGS. 4A and 5, an access cover 327 is attachable to the rear cover assembly 300 and may include cable glands to seal the cable entries, preventing ingress of liquid into the display enclosure 10 at the cable entry point. The rear cover assembly 300 may include a display control access 330 for an on screen display (OSD) interface 530. The OSD interface 530 may include a number of inputs operable by a user that allow for manual control and/or adjustment of settings of the display device 20. A cable entry cover 335 may be installed over the display control access 330 to prevent ingress of liquids into the display enclosure 10.

The display enclosure 10 may include internal supports disposed within the display enclosure 10. As depicted in FIG. 3, the display enclosure 10 includes display brackets 180. The display brackets 180 are attachable to a rear portion of the display device 20. The display brackets 180 are generally elongated members with openings for receiving connecting elements to secure the display device 20. The display brackets 180 may be directly coupled to the bezel 100 or, as depicted, by connecting brackets 182 attachable to the bezel 100. The display brackets 180 secure the display device 20 in the display enclosure 10 and provide additional rigidity to the display enclosure 10.

FIG. 6 provides a block diagram representing components of the display enclosure 10 with the display device 20 and the monitoring device 30. The power supply 500 may be included within the display enclosure 10 to provide direct or indirect power to a heat transfer device 600, the internal fan or fans 410, a heater 420 (e.g., a heating element), a temperature sensor 560, a humidity sensor 570, a remote control input 550, an ambient light sensor 540, the display device 20, a display controller 520, a thermal controller 510 and other devices within the display enclosure 10. As shown in FIG. 2, the power supply 500 may be mounted within the display enclosure 10. The power supply 500 is electrically coupled to a power source, for example, directly or indirectly to a conventional power grid or other source. An electromagnetic interference filter or EMI filter 505, shown in FIG. 6, may be included between the power source and the power supply 500. In addition to the display device 20, the power supply 500 may be a significant heat generator that may raise the internal temperature within the display enclosure 10 when in operation.

The display controller 520 that controls the display device 20 may be mounted within display enclosure 10. Alternatively, the controller 520 may be integral with the display device 20. As shown in FIG. 6, the display controller 520 is electrically coupled to the power supply 500, the display device 20, and the OSD interface 530 accessible from the rear of the display enclosure 10. The display controller 520 includes inputs for receiving typical audio/visual signals, e.g., HDMI, VGA, PC audio input, component video, S-video, composite video, SPDIF, audio inputs, and ATSC/cable tuner signals. The display controller 520 includes processing components for output of a signal for display by the display device 20. An audio output from the display controller 520 may be directed to the display device 20 or to stand alone audio equipment that may be situated outside the display enclosure 10.

In addition to the display controller 520, the display enclosure 10 includes a thermal controller 510. As shown in FIG. 6, the thermal controller 510 is electrically coupled to the power supply 500 to receive power. The thermal controller 510 is also electrically coupled to the temperature sensor 560, the humidity sensor 570, the one or more fans 410, and the one or more heaters 420. The thermal controller 510 may be configured to control the heating or cooling of a heat transfer device 600. In one implementation, the thermal controller 510 may receive an output from the temperature sensor 560, such as a value indicative of an internal temperature of the display enclosure 10, and an output from the humidity sensor 570, such as a value indicative of an internal humidity of the display enclosure 10, and control the operation of one or more fans 410, one or more heaters 420, and the heat transfer device 600.

The one or more fans 410 may be positioned to circulate air within the display enclosure 10. In some implementations, the one or more fans 410 may be positioned relative to the one or more heat transfer devices 600 (e.g., adjacent to, above, etc.) to increase the convective heat transfer from the heat transfer device 600 to the interior air of the display enclosure 10 to assist the heating or cooling provided by the one or more heat transfer devices 600.

In a particular embodiment, a dual temperature integrated circuit sensor is mounted to the thermal control unit 510. The thermal control unit 510 may be equipped with one or more temperature set points. The thermal control unit 510 may activate the internal fan 410 (or other thermal control device) when a first temperature set point is detected, for example, 30° C (thirty degrees Celsius). The internal fan 410 then operates, mixing the air within the display enclosure 10, for a predetermined period, until the detected internal temperature falls below the first temperature set point, or the thermal control unit 510 otherwise shuts off the internal fan 410.

The heater 420 may be located within the display enclosure 10 to facilitate operation of the display device 20 under ambient temperature conditions that fall below the operational range or that would degrade the operation of the display device 20. The heater 420 may also be operated while the display device 20 is off or in sleep mode, to mitigate damage to the display device 20 that could be caused by ambient temperatures below the storage temperature of the device. Various heating devices and combinations thereof may be used in the display enclosure 10. In a particular embodiment, the heater 420 may be one or more electrical strip heaters. Like the internal fan 410, the heater 420 is electrically coupled to a power source, such as the power supply 500, for operation. The heater 420 may have its own control or be electrically coupled to the thermal control unit 510. Where the heater 420 is coupled to the thermal control unit 510, the thermal control unit 510 activates the heater 420 upon detecting a temperature within the display enclosure 10 that falls below a second temperature set point. In a particular embodiment, the second temperature set point is set at 5 degrees Celsius. The heater 420 operates, elevating the temperature within the display enclosure 10, for a predetermined period, until the detected internal temperature rises above the second temperature set point, or the thermal control unit 510 otherwise shuts off the heater 420.

The remote control input 550 is configured to communicate with a remote device (not shown) and a controller, such as to control operation of the display enclosure and/or the display device in the interior of the enclosure by way of the remote device. The remote device can be located anywhere with respect to the enclosure. As shown in FIG. 6, the remote control input 550 is electrically coupled to the display controller 520, such as to allow a user to control the display device 20 in the enclosure by way of a remote device that communicates to the remote control input 550, which in-turn communicates to the display device 20 through the display controller 520. It is noted that a remote control input may be configured to communicate with other elements of the system, such as, for example, the thermal controller 510, the power supply 500, the monitoring device 30, and/or any other element of the system.

The temperature sensor 560 is electrically coupled to the thermal controller 510 and the power supply 500 and is configured to output a signal indicative of a temperature detected by the temperature sensor 560. The temperature sensor 560 may include a thermistor, a thermocouple, a resistance temperature detector, or any other temperature sensor. The signal output from the temperature sensor 560 may be a voltage value that corresponds to a detected temperature. The thermal controller 510 may receive and use the voltage value representative of the temperature as an input for controlling the one or more fans 410 and/or the heat transfer device 600.

Accordingly, in some implementations the heat transfer device 600 may be located between the power supply 500 and the rear cover assembly 300 such that the heat transfer device 600 may actively cool the power supply 500 and/or the interior of the display enclosure 10. The heat transfer device 600 may be conductively coupled to the rear cover assembly 300 such that thermal energy may be conducted to the heat sink portion of the rear cover assembly 300. In some instances, such as when the display enclosure 10 is within a cold environment, the heat transfer device 600 and/or the heater 420 may heat the power supply 500 and/or the interior of the display enclosure 10. The heat transfer device 600 may be any suitable active or passive thermal control device, such as a heat pipe assembly, an internal or external heat sink, or a thermoelectric module (e.g., a Peltier thermoelectric module).

The temperature sensor 560 is positioned within the display enclosure 10 to measure the internal temperature of the display enclosure 10. In some implementations, the temperature sensor 560 may be positioned near the heat transfer device 600. For example, the temperature sensor 560 may be positioned adjacent to the heat transfer device 600. In other instances, the temperature sensor 560 may be positioned remote from the heat transfer device 600, such as at an opposite corner of the display enclosure 10 relative to the heat transfer device 600. In still further implementations, the temperature sensor 560 may be arbitrarily positioned within the display enclosure 10.

The humidity sensor 570 is configured to output a signal indicative of a humidity detected by the humidity sensor 570. The humidity sensor 570 may include a hygrometer, a humistor, or any other humidity sensor. The signal output from the humidity sensor 570 may be a voltage value that corresponds to a detected humidity, such as a relative humidity. The thermal controller 510 may receive and use the voltage value representative of the humidity as an input for controlling the one or more fans 410, the one or more heaters 420, and/or the heat transfer device 600.

The humidity sensor 570 is positioned within the display enclosure 10 to measure the internal humidity of the display enclosure 10. In some implementations, the humidity sensor 570 may be positioned near the temperature sensor 560 and/or the heat transfer device 600. For example, the humidity sensor 570 may be positioned adjacent to the temperature sensor 560 such that the humidity and temperature measurements are taken at substantially the same spatial position. In other instances, the humidity sensor 570 may be positioned remote from the temperature sensor 560. In still further implementations, the humidity sensor 570 may be arbitrarily positioned within the display enclosure 10. In some implementations, the humidity sensor 570 may be omitted.

The thermal controller 510 may control the current flowing through the one or more heat transfer devices 600 using pulse width modulation (PWM). The thermal controller 510 may control the duty cycle of the pulse width modulation to vary the heating or cooling provided by the one or more heat transfer devices 600. When the duty cycle of the pulse width modulation reaches 100%, then the maximum current is applied and the maximum heating or cooling is provided by the one or more heat transfer devices 600.

The display enclosure 10 may include various additional features that, for example, sense ambient light conditions and communicate with the display device 20 to adjust the brightness of the display to enhance viewability of the display device 20 under various light conditions. For example, the display enclosure 10 may be provided with an ambient light sensor 540. The ambient light sensor 540 senses the light level outside the display enclosure 10 and may be mounted to the bezel 100 or beneath the front cover 200. The ambient light sensor 540 is electrically coupled to the power supply 500 and the display controller 520. The display controller 520 receives input from the ambient light sensor 540 and, based on the input signal, may be configured to adjust the displayed image, for example, the brightness and/or the contrast, generated by the display device 20. For instance, under relatively low ambient light conditions, such as at night when the display enclosure 10 is located outdoors, the display controller 520 may be configured to automatically decrease the brightness of the display device 20 based on the input from the ambient light sensor 540.

The monitoring device 30 receives input from various sensors disposed within the interior of the display enclosure 10 to monitor the state of the display device 20. For example, in one exemplary embodiment, the monitoring device 30 monitors the internal temperature of the enclosure 10 with the temperature sensor 560 and monitors the internal humidity of the enclosure 10 with the humidity sensor 570. If the monitoring device 30 detects that the internal temperature transitions beyond preprogrammed limits or the humidity transitions beyond preprogrammed limits, the monitoring device 30 may record the error, communicate the error to a remote user, and/or initiate an action to resolve the error, as described in detail below.

The monitoring device 30 may further monitor the state of various internal components of the enclosure 10. For example, in one exemplary embodiment, the monitoring device 30 monitors the current draw of internal fans 410, heating elements 610 or other components facilitating the maintenance of the conditions of the interior of the enclosure 10. The current draw may be detected with a current sensor 620 (e.g., a Hall Effect current sensor, a resistor, etc.). If the monitoring device 30 detects that the current draw of a particular component exceeds a preprogrammed threshold, the monitoring device 30 may record the error, communicate the error to a remote user, and/or initiate an action to resolve the error, as described in detail below.

The monitoring device 30 may further receive an input from one or more accelerometers 630. The monitoring device 30 utilizes the inputs from the accelerometers 630 to sense the orientation of the display device 20. The input from the accelerometers 630 may be further utilized by the monitoring device 30 to detect shocks or accelerations above a preprogrammed threshold that may be the result of the enclosure 10 being struck or being dropped. If the monitoring device 30 detects that the enclosure 10 has been struck or dropped, the monitoring device 30 may record the error and/or communicate the event to a remote user, as described in detail below.

The monitoring device 30 may include a global positioning system (GPS) receiver 640 to monitor the location of the enclosure 10. At various times (e.g., when the enclosure 10 is installed, when the enclosure 10 is serviced, monthly, etc.), the location and orientation of the enclosure 10 may be recorded, either at the enclosure 10 (e.g., by a user actuating a physical button on the GPS receiver 640, on the enclosure 10, etc.) or remotely (e.g., by a user activating a process through a software interface on a remote computing device). If the location (e.g., latitude, longitude, altitude, etc.) and/or orientation of the enclosure 10 changes beyond a predetermined threshold, the monitoring device 30 may be configured to record the incident, communicate the event to a remote user, and/or initiate an action, as described in detail below.

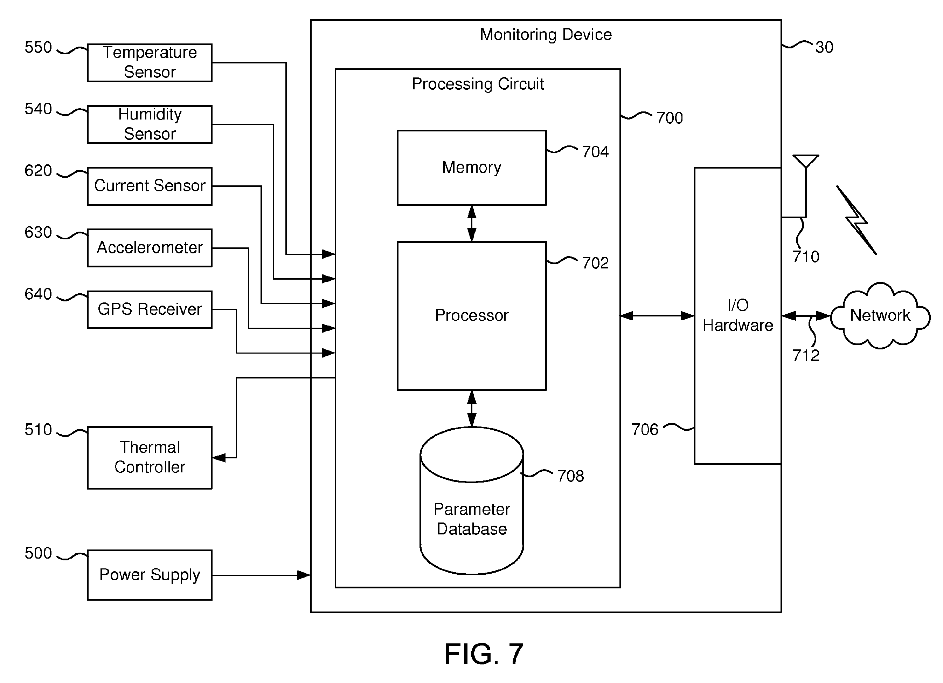

Referring to FIG. 7, a block diagram of the monitoring device 30 is shown according to an exemplary embodiment. The monitoring device 30 may include a processing circuit 700 with a processor 702 and a memory 704. The memory 704 stores machine instructions that, when executed by the processor 702, cause the processor 702 to perform one or more operations described herein. The processor 702 may include a microprocessor, FPGA, ASIC, any other form of processing electronics, or combinations thereof. The memory 704 may comprise any electronic storage medium such as, but not limited to, a floppy disk, a hard drive, a CD-ROM, a DVD-ROM, a magnetic disk, RAM, ROM, EEPROM, EPROM, flash memory, optical memory, or combinations thereof. The memory 704 may comprise a tangible computer-readable storage medium that stores non-transitory machine instructions. The processing circuit 700 may include any number of processors and memories. In other words, the processor 702 may represent the collective processing devices of the processing circuit 700 and the memory 704 may represent the collective storage devices of the processing circuit 700. The processor 702 and the memory 704 may be on the same printed circuit board or may be in communication with each other via a bus or other form of connection.

The processing circuit 700 of FIG. 7 further includes a parameter database 708. The parameter database 708 includes various predetermined set points for the monitoring device 30. The parameter database 708 may include, for example, temperature and humidity set points defining a desired operating environment of the interior of the enclosure 10 for the display 20, acceleration set points indicating tampering with or impact to the enclosure 10, current set points for allowable current draw through the fans 410, the heating elements (e.g., the heater 420) or other components, or distance set points defining an allowable movement range for the enclosure 10. The values of the set points in the database 708 may be defined by a user (e.g., using a software interface via a remote device or a display and interface integral to the monitoring device 30), may be defined by a manufacturer of the enclosure 10, the display 20, or other internal components of the display, and/or may be generated automatically by the monitoring device 30 using collected data. The parameter database may be periodically updated by an end user, the manufacturer, and/or another entity in various embodiments.

The monitoring device 30 further includes a communications interface, shown as I/O hardware 706. The I/O hardware 706 includes the interface hardware used by the processing circuit 700 to receive data from other devices and/or to provide data to other devices. For example, a command may be sent from the processing circuit 700 to a remote computing device via the I/O hardware 706. The I/O hardware 706 may include, but is not limited to, hardware to communicate on a local system bus and/or on a network. In one embodiment, the monitoring device 30 may include a wireless system 710 for wirelessly communicating with a network and/or a wired connection 712 for communicating with a network. The wireless system 710 includes a includes a radio and antenna for receiving and supporting OFDM-based wireless signals such as IEEE 802.11n LAN radio frequencies. The wireless system 710 may also support various encryption algorithms, including, for example, 802.1x, 802.11i, WPA2, WPPA, and WEP 64/128 TKIP AES. The wired connection 712 may be any suitable standard cable capable of transmitting data, such as category 5e (CAT-5e), category 6 (CAT-6), modular cable, or fiber optic cable.

The processor 702 includes a TCP/IP stack capable of supporting a wide range of IP protocols including, but not limited to DHCP, email client, web server (HTTP), DNS client, dynamic DNS, IP routing, and IP multicasting. The processor 702 may use any appropriate protocol to communicate information such as a status message or a warning to a remote user via the I/O hardware 706.

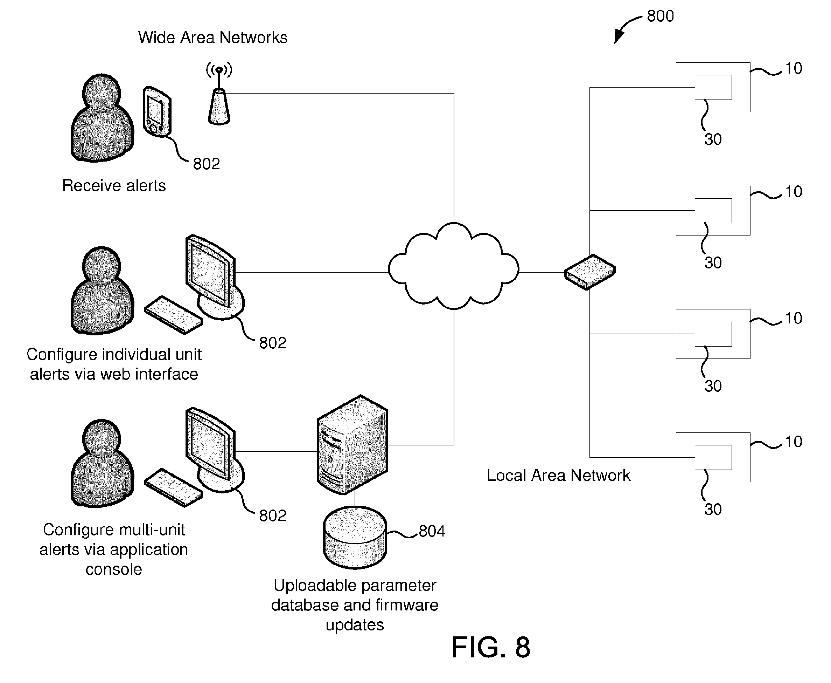

Referring to FIG. 8, a diagram is shown illustrating components of a network 800. The monitoring device 30 communicates through the network 800 with a user device 802. The network 800 may be a local area network (LAN), a wide area network (WAN), a cellular network, a satellite network, a radio network, the Internet, or any other type of data network or combination thereof. The network 800 may include any number of computing devices (e.g., computers, servers, routers, network switches, etc.) configured to transmit, receive, or relay data. The network 800 may further include any number of hardwired and/or wireless connections. For example, user devices 802 may communicate wirelessly (e.g., via WiFi, cellular, radio, etc.) with a transceiver that is hardwired (e.g., via a fiber optic cable, a CAT-5e cable, CAT-6 cable, etc.) to a computing device of the network 800. Additional control parameters and firmware may be uploaded to the monitoring device 30 from a database 804 connected to the network. The database 804 may be utilized to selectively update a single monitoring device 30 or may be utilized to update multiple monitoring devices 30 connected to the network (e.g., monitoring devices 30 for a network of displays at a sports stadium or amusement park).

The user device 802 may be any type of electronic device (e.g., desktop computer, laptop, tablet, smartphone, etc.) configured to communicate via the network 800 via an interface. The interface may be any type of communications interface configured to communicate with the monitoring device 30 via the network 800 either wirelessly or via a wired connection. The user device 802 may be configured to allow a user to interact with the monitoring device 30 in a variety of ways. In one embodiment, the user device 802 may allow a user to receive alerts from the monitoring device 30. In another embodiment, the user device 802 may allow a user to receive alerts from the monitoring device 30 and configure an individual display enclosure 10. In still another embodiment, the user device 802 may allow a user to receive alerts from multiple monitoring devices 30 and configure multiple display enclosures 10.

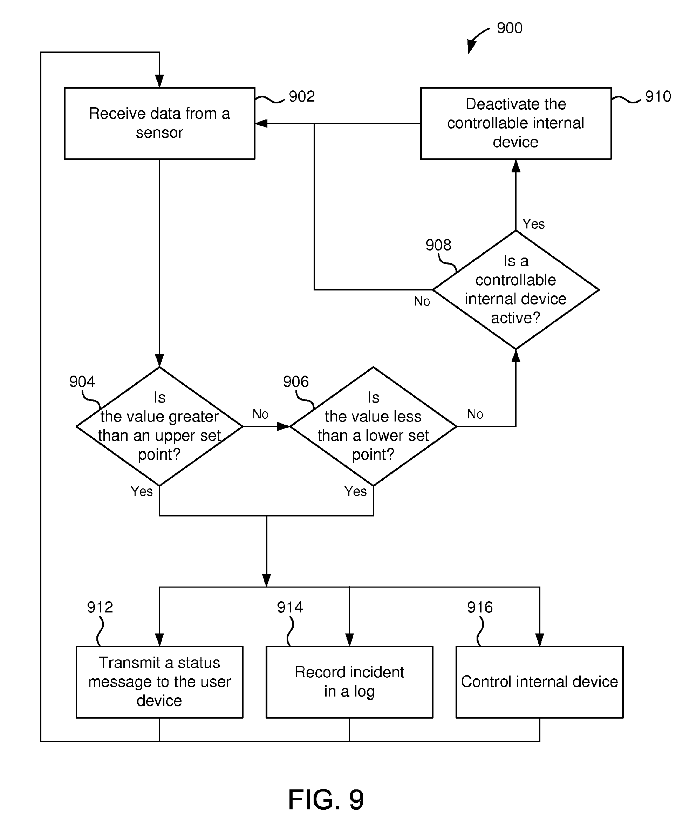

Referring to FIG. 9, the monitoring device 30 may be configured with one or more set points related to a property monitored with a sensor (e.g., internal enclosure temperature, internal enclosure humidity, electrical current, location, etc.), such as a lower set point and an upper set point defining a range (e.g., operational range, target range, etc.). Using the one or more set points, the monitoring device 30 may be configured to monitor a device within the enclosure, alert a user via the network 800, and/or control one or more devices (e.g., the internal fan 410, the heat transfer device 600, the heater 610. The monitoring device 30 may include a multitude of set points in a database (e.g., database 708, database 804, etc.) for a wide variety of properties.

In an exemplary process 900, the monitoring device 30 may receive data from a sensor (902). The received data may be represented by a voltage outputted by the sensor (e.g., the temperature sensor 560, the humidity sensor 570, the current sensor 620, the accelerometer 630, etc.) or may be computer-readable data transmitted from another computing device (e.g., the GPS receiver 640). The received data may be compared against a first set point, such as the upper set point, by the monitoring device 30 to determine whether the detected value of the property is above the upper set point (904). The detected value above the upper set point may be, for example, a temperature exceeding an upper temperature set point, a humidity above an upper humidity set point, a current above an upper current set point, an acceleration above an upper acceleration set point (e.g., an acceleration indicating that the display enclosure 10 has been struck or has fallen), or position data indicating a change in position from the recorded position and orientation (e.g., the last location and orientation of the enclosure 10 recorded by the user) exceeding a predetermined range. If it is determined that the detected value of the property does not exceed the upper set point, then a determination may be made by the monitoring device 30 whether the detected value of the property below the lower set point (906). The detected value below the lower set point may be, for example a temperature below the operational range of the display device 20 or that would degrade the operation of the display device 20.

If it is determined that the detected value is not above the upper set point or below the lower set point, then a determination may be made by the monitoring device 30 whether internal devices of the enclosure 10 (e.g., the one or more fans 410, the one or more heat transfer devices 600, the one or more heaters 610, an alarm, etc.) are active (908). If the internal devices of the enclosure 10 are not active, then the process 900 may return to 902 to receive data from a sensor. If the internal devices of the enclosure 10 are active, then the process 900 may proceed to deactivate the devices (910). The process 900 may then return to 902 to receive data from a sensor.

If it is determined that the detected value of the property is above the upper set point or below the lower set point, then the monitoring device 30 may be configured to transmit status message (e.g., alert, warning, etc.) to the user device 802 via the network 800 by any suitable communication protocol (912). The status message may be transmitted, for example, by email, text messaging (SMS) or proprietary reporting to a user device 802 embodied as a management console.

In other embodiments, the monitoring device 30 may record the occurrence of a value outside the upper set point or the lower set point in a log (step 914). The log may be stored in the memory 704 of the monitoring device 30 and/or may be stored in an external device (e.g., an external backup, the database 804, the memory of the user device 802, etc.).

In other embodiments, the monitoring device 30 may take actions to control one or more device in response to a value outside the upper set point or the lower set point to bring the sensed value back in a preferred range (e.g., between the upper set point and the lower set point) (916). The monitoring device 30 may take action automatically or may take action in response to an instruction sent from the user device 802 via the network 800. For example, the monitoring device 30 may be configured to activate one or more of the fans 410, activate one or more heaters 610, or activate one or more heat transfer devices 600 if the temperature and/or the humidity is detected to be outside a desired range. In some implementations, the monitoring device 30 is configured to operate the one or more fans 410, the one or more heat transfer devices 600, and/or the one or more heaters 610 until the detected temperature and/or humidity is brought back into the desired range. The devices may be operated directly by the monitoring device 30 or may be operated by another device (e.g., the thermal controller 510) in response to a control signal transmitted by the monitoring device 30.

The monitoring device 30 may operate other internal devices based on the data received from various sensors. For example, if the data received from the GPS receiver 640 indicates that the enclosure 10 has been moved a predetermined distance from an expected location, the monitoring device 30 may activate an alarm (e.g., a buzzer, tone, flashing light, etc.).

The monitoring device 30 may be configured with multiple set points, such as a first upper set point, a second upper set point, a first lower set point, and a second lower set point. The first upper and lower set points may define a first range (e.g., operational range) within the sensed properties are intended to remain. The second upper and lower set points may define a second range inclusive of the first range and define an upper warning range and a lower warning range outside the first range. The monitoring device 30 respond differently depending on which set points are exceeded by the value of the property detected by the sensor. For example, the monitoring device 30 may be configured with a first upper temperature set point and a second upper temperature set point that is greater than the first upper temperature set point. If the temperature sensor 560 detects a temperature that is above the first upper temperature set point but below the second upper temperature set point (e.g., a slightly elevated temperature in the upper warning range), the monitoring device 30 may send an alert to the user device 802 via the network 800. If, however, the temperature sensor 560 detects a temperature that is above the second upper temperature set point, the monitoring device 30 may take immediate actions (e.g., activating one or more fans 410, activating one or more heat transfer devices 600 in a cooling mode, etc.) in addition to or instead of sending an alert to the user device 802 via the network 800. In other embodiments, the monitoring device 30 may be configured with additional set points defining a multitude of ranges and may respond in a variety of ways depending on the range in which the detected value falls.

The monitoring device 30 may be configured to respond to a detected value of a property outside a desired range either immediately or after a predetermined length of time. For example, the monitoring device 30 may continuously record the detected temperature in a log (e.g., record the temperature every 10 seconds, 30 seconds, 1 minute, 5 minutes, 10 minutes, etc.) but may not alert a user of a temperature above the upper set point or below a lower set point unless the temperature remains above the upper set point or below a lower set point for a predetermined length of time. In this way, the occurrence of false alarm alerts due to momentary fluctuations in a detected property can be reduced.

In other embodiments, the monitoring device 30 may be configured to take preventative actions based on data collected by the sensors. For example, the monitoring device 30 may utilize predictive algorithms and data from the temperature sensor 560 and the humidity sensor 570 to predict when the temperature and humidity within the enclosure is approaching the dew point. The monitoring device 30 may respond by transmitting an alert to the user device 802 via the network 800 to allow the user to manually activate the one or more fans 410, the one or more heat transfer devices 600, or the one or more heaters 610 to avoid condensation forming inside the enclosure 10. In other embodiments, the monitoring device 30 may take independent action by activating the one or more fans 410, the one or more heat transfer devices 600, and the one or more heaters 610 to avoid condensation forming inside the enclosure 10 without instructions from a user.

The terms "coupled," "connected," and the like as used herein mean the joining of two components directly or indirectly to one another. Such joining may be stationary (e.g., permanent) or moveable (e.g., removable or releasable). Such joining may be achieved with the two components or with any additional intermediate components. For example, the two components may be integrally formed as a single unitary body with one another or with any additional intermediate components.

The foregoing description of embodiments of the present invention have been presented for purposes of illustration and description. It is not intended to be exhaustive or to limit the present invention to the precise form disclosed, and modifications and variations are possible in light of the above teachings or may be acquired from practice of the present invention. The embodiments were chosen and described to explain the principles of the present invention and its practical application to enable one skilled in the art to utilize the present invention in various embodiments and with various modifications as are suited to the particular use contemplated.

## Claims

1. A display enclosure with a monitoring system, comprising:
a display enclosure having an interior, the interior of the display disclosure sized and configured to receive a display device therein;
a sensor positioned within the interior of the display enclosure; and
a monitoring device coupled to the sensor, the monitoring device including:
a memory including a plurality of stored values defining a range;
a processor communicatively connected to the memory; and
a communication interface configured to communicate with a remote device;
wherein the processor is configured to process a signal output from the sensor and indicative of a property of the interior of the display enclosure, and wherein the processor is further configured to transmit a status message to the remote device via the communication interface if the property indicated by the signal is outside of the range defined by the stored values.

2. The display enclosure with a monitoring system of claim 1, wherein the sensor comprises at least one of a temperature sensor, a humidity sensor, and/or an accelerometer.

3. The display enclosure with a monitoring system of claim 1 or claim 2, wherein the sensor comprises the or a temperature sensor, wherein the detected property of the interior is a temperature, and wherein the range is a temperature range.

4. The display enclosure with a monitoring system of claim 1, claim 2 or claim 3, further comprising:
a humidity sensor positioned within the interior of the display enclosure;
wherein the humidity sensor produces a signal output that is indicative of a detected humidity of the interior;
wherein the processor is configured to process the signal output from the humidity sensor and transmit a second status message to the remote device via the communication interface if the detected humidity indicated by the signal output of the humidity sensor is outside a humidity range defined by a plurality of stored humidity values.

5. The display enclosure with a monitoring system of claim 4 when dependent on claim 3, further comprising:
a parameter database in communication with the microprocessor and configured to store the plurality of values defining the temperature range and the plurality of stored humidity values;
wherein the plurality of values defining the temperature range and the plurality of stored humidity values are reconfigurable via an input into the monitoring device.

6. The display enclosure with a monitoring system of claim 2, claim 3, claim 4 when dependent on claim 2 or claim 3, or claim 5, further comprising:
a heat transfer device; and
a thermal controller configured to control operation of the heat transfer device;
wherein the thermal controller receives an output signal from at least one of the monitoring device and the temperature sensor, and
wherein the thermal controller activates the heat transfer device to heat the interior when the output signal indicates that a temperature in the display enclosure is below a first set point and activates the heat transfer device to cool the interior when the signal output indicates the temperature in the display enclosure is above a second set point; and
wherein the first and second set points define the range.

7. The display enclosure with a monitoring system of any one of the preceding claims, further comprising:
a display controller; and
a light sensor configured to sense a level of light outside the display enclosure and to communicate an output signal indicating the level of light to the display controller; and
wherein the display controller is configured to adjust a brightness of the display device based on the output signal indicating the level of light.

8. The display enclosure with a monitoring system of claim 1, claim 2 or any one of claims 3 to 7 when dependent either directly or indirectly on claim 2, wherein the sensor comprises the or an accelerometer positioned within the interior and configured to sense an acceleration of the display enclosure, wherein the monitoring device receives an input signal from the accelerometer in the event of an acceleration and communicates an output signal indicating a level of the acceleration to the remote device if the acceleration is greater than a threshold acceleration.

9. The display enclosure with a monitoring system of claim 1, or any one of claims 2 to 8, wherein the processor is coupled to a device positioned within the interior, wherein the device comprises one of a fan, a heater, or a thermoelectric module, and wherein the processor is configured to transmit operational instructions to the device in response to the signal output from the sensor.

10. The display enclosure with a monitoring system of any of the preceding claims, further comprising:
a display controller; and
a light sensor electrically coupled to the display controller;
wherein the light sensor senses a level of light outside the display enclosure and communicates the level of light to the display controller; and
wherein the display controller is configured to adjust a brightness of the display device based on the level of light.

11. The display enclosure with a monitoring system of claim 1, or any one of claims 2 to 10, wherein the processor is configured to record the signal output from the sensor in a storage device.

12. The display enclosure with a monitoring system of claim 1, or any one of claims 2 to 11, wherein the sensor comprises a current sensor monitoring current draw through a device positioned within the interior, wherein the device comprises one of a fan, a heater, or a thermoelectric module, and wherein the monitoring device communicates a signal to the remote device when a threshold current draw is reached.

13. The display enclosure with a monitoring system of claim 1, or any of claims 2 to 12, wherein the sensor comprises a humidity sensor, wherein the detected property of the interior is a humidity, and wherein the range is a humidity range.

14. The display enclosure with a monitoring system of claim 1, or any one of claims 2 to 13, wherein the signal output is a voltage value that corresponds to a detected value of the sensor.

15. The display enclosure with a monitoring system of claim 1, or any one of claims 2 to 14, wherein the communication interface includes a receiver that is configured to receive an input from a transmitting device located outside the display enclosure, wherein the receiver is in communication with the memory to allow the plurality of stored values to be reconfigured by the input from the transmitting device, wherein the receiver of the communication interface is a wireless receiver configured to receive the input from the transmitting device wirelessly located remotely relative to the display enclosure.
